(19) Europäisches Patentamt
European Patent Office
Office européen des brevets

(11) EP 3 744 764 A1

(12) **EUROPÄISCHE PATENTANMELDUNG**

(43) Veröffentlichungstag:
**02.12.2020 Patentblatt 2020/49**

(21) Anmeldenummer: **20174599.9**

(22) Anmeldetag: **14.05.2020**

(51) Int Cl.:
***C08G 77/46*** *(2006.01)* ***C08G 77/08*** *(2006.01)*
***B01D 19/04*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **28.05.2019 EP 19176883**

(71) Anmelder: **Evonik Operations GmbH**
**45128 Essen (DE)**

(72) Erfinder:
- **Favresse, Philippe**
  **40880 Ratingen (DE)**
- **Fiedel, Michael**
  **45239 Essen (DE)**
- **Hesse, Ute**
  **45357 Essen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

# (54) HERSTELLUNG VON SIOC-VERKNÜPFTEN POLYETHERSILOXANEN

(57) Die Erfindung betrifft ein Verfahren zur Herstellung von SiOC-verknüpften Polyethersiloxanen durch Umesterung von Alkoxysiloxanen mit Polyetherolen in Gegenwart von Trifluormethansulfonat als Katalysator, wobei der kalkulatorische Gesamtwassergehalt der Reaktanden, bestehend aus Alkoxysiloxanen und Polyetherolen ≤ 5000 Massen-ppm, vorteilhafterweise ≤ 300 Massen-ppm, vorzugsweise ≤ 150 Massen-ppm, weiter bevorzugt ≤ 100 Massen-ppm, insbesondere ≤ 50 Massen-ppm beträgt, wobei zuvor die Bestimmung der individuellen Wassergehalte, vorzugsweise durch Titration nach Karl Fischer erfolgt.

EP 3 744 764 A1

## Beschreibung

Die Erfindung liegt auf dem Gebiet der Polyethersiloxane. Insbesondere betrifft sie ein Verfahren zur Herstellung von SiOC-verknüpften Polyethersiloxanen ausgehend von Alkoxypolysiloxanen durch Umesterung mit Polyetherolen.

SiOC-verknüpfte Polyethersiloxane sind bekannte Bestandteile von Entschäumern, die zur Entschäumung wässriger und nichtwässriger Medien eine besondere Wirksamkeit und Stabilität zeigen. Dazu zählen sowohl die Schauminhibierung, die Entschäumung, eine sehr gute Langzeitstabilität, als auch die hervorragende Verträglichkeit in wässrigen und nicht wässrigen Medien. Alle diese Eigenschaften sind für moderne Lackanwendungen von hoher Bedeutung.

Der Begriff Entschäumer umfasst im vorliegenden Fall sowohl Produkte als auch Formulierungen, die Schaum verhindern, als auch solche, die Schaum zerstören sowie eine Entlüftung ermöglichen. In der Praxis sind die Übergänge zwischen diesen Produkten fließend, so dass hier der gemeinsame Sammelbegriff Entschäumer verwendet wird.

In vielen technischen Verfahren, insbesondere, wenn in wässrigen Medien gearbeitet wird, ist es notwendig, die unerwünschte Bildung von Schaum während der Herstellungs- oder Verarbeitungsprozesse zurückzudrängen oder ganz zu unterbinden, da Schaum bzw. Schaumkronen, die sich bei Rühr- und Dispergiervorgängen oder in den Gebinden während des Abfüllvorganges ansammeln, die Produktionszeiten verlängern oder aber das Effektivvolumen der Anlage vermindern bzw. deren korrekte Arbeit sogar verhindern können (Überlaufen, fehlende Farbübertragung).

Dies kann erreicht werden, indem man Entschäumer hinzugibt, die schon bei sehr geringen Einsatzkonzentrationen ab etwa 0,001 Gew.-% in der Lage sind, unerwünschte Schäume zu vermeiden oder zu zerstören und gleichzeitig nach der Applikation der Systeme keine Oberflächenstörungen hervorzurufen. In der Praxis muss dieser letztere Faktor mindestens ebenso berücksichtigt werden wie eine gute Entschäumung.

Unter Oberflächenstörungen sind für den Anwender unerwünschte Eigenschaften wie beispielsweise Pinholes, Krater, Glanzverlust, Orangenschaleneffekt, Runzelbildung und Haftungsverlust im Beschichtungssystem zu verstehen. Für den Anwender ist aber auch eine entsprechende Langzeitstabilität der Formulierungen sehr wichtig, da oftmals Produkte wie Farben nicht umgehend, sondern mitunter erst nach längerer Lagerung verbraucht werden. Bei Lagerung unter extremen klimatischen Bedingungen (Hitze und Sonneneinstrahlung) kann mitunter die Wirksamkeit einer Entschäumerformulierung schon nach kurzer Zeit zusammenbrechen.

Die Synthese von Polyethersiloxanen erfolgt durch die Anknüpfung von Polyether an einer Polysiloxankette über eine Si-OC oder Si-C Bindung. Die Chemie bietet an dieser Stelle vielfältige Möglichkeiten an verschiedenen Polyethersiloxan Strukturen. Dementsprechend sind nicht nur lineare Strukturen herstellbar, die in zwei Unterklassen unterteilt werden: die A-B-A Triblockcopolymer Strukturen und die A-(B-A)x als sowohl C-A-(B-A)x-C1 Multiblockcopolymer Strukturen, sondern auch leicht oder stark verzweigte Copolymerstrukturen und kammartige Copolymere synthetisierbar.

Dem Fachmann ist bekannt, dass es bei diesen SiOC-verknüpften Polyethersiloxanen um eine Produktklasse handelt, die nicht zum Verharzen neigen. Auch wenn SiOC-verknüpfte Polyethersiloxane reaktive Gruppen, wie etwa Hydroxygruppen, enthalten, so werden sie nicht zur gezielten Vernetzung eingesetzt. Sie sind nicht filmbildend im Gegensatz zu Silikonharzen.

Zahlreiche Umesterungsverfahren sind aus dem Stand der Technik bekannt. Beispielsweise zielt die WO2011/060050 A1 auf ein Beschichtungssystem ab, bestehend aus einem Bindemittel und Partikeln, wobei der Einsatz bestimmter Siloxan-basierter Modifizierungsmittel von zentraler Bedeutung ist. Ein Zugang zu diesen Modifizierungsmitteln stellt die dehydrogenative Verknüpfung von SiH-Gruppen tragenden Siloxanen mit Polyalkylenglykolmonoalkylethern dar, bei der Zinkacetylacetonat als Katalysator fungiert.

Die WO2015/039837 A1 beansprucht ein hydroxylgruppenhaltiges Silikon-Polyester-Acrylat-Bindemittel sowie dessen Herstellung und dessen Verwendung. Dort wird ausgeführt, dass unter anderem Zinkacetylacetonat ein Katalysator ist, der in Anwesenheit von Feuchtigkeit bereits bei Raumtemperatur die Hydrolyse und Kondensation von Silyltrialkoxy-Gruppen fördert und so die Aushärtung des Systems herbeiführt. Sinngemäß nennt auch die EP 2636696 A1 Zinkacetylacetonat als geeigneten Hydrolyse- und Kondensationskatalysator zur Aushärtung von modifizierten Alkoxylierungsprodukten, die eine nichtterminale Alkoxysilylgruppe und mehrere Urethangruppen aufweisen.

Üblicherweise werden Umesterungsprozesse an Alkoxyorganosiliziumverbindungen und zwar sowohl im Satzbetrieb als auch kontinuierlich geführt durch Zugabe von Säuren oder Basen katalysiert, wie es zum Beispiel die US 6489500 B2 offenbart.

Ältere Patentschriften wie die US 2917480 und die US 2834748 nennen als zu verwendende Katalysatoren organische Säuren wie Monochloressigsäure, Perfluoroessigsäure oder auch alkalische Verbindungen wie Kaliumsilanolat.

Abseits der Verwendung reiner Säuren oder Basen und der Zielstellung gewidmet ein verbessertes Verfahren für die Umesterung von Alkoxysiliconverbindungen bereitzustellen, offenbart US 3133111 in diesem Zusammenhang als Katalysator die salzartige Kombination bestehend aus den einfachen aliphatischen Säuren mit 1 bis 7 C-Atomen, oder aus den hiervon abgeleiteten chlorierten, oder aber insbesondere aus den hiervon abgeleiteten perfluorierten

Säuren mit einer basischen Komponente, die die Alkalimetallhydroxide der Alkalimetalle umfasst, deren Atomzahl größer 11 ist sowie Ammoniumhydroxid, quartäre Alkylammoniumhydroxide, Stickstoff enthaltende organische Basen mit der Maßgabe, dass die in der Salzkombination vertretene Säure in überstöchiometrischer Konzentration vorliegt.

Die US 3801616 zielt ab auf die Herstellung von SiOC-basierten flüssigen Siloxan-Polyoxyalkylen-Blockcopolymeren durch Umesterungsreaktion zwischen Alkoxygruppen aufweisenden Siloxanen und mindestens je eine alkoholische Funktion aufweisenden Polyoxyalkylenen in Gegenwart salzartiger Katalysatoren mit definierter Wasserlöslichkeit und einem in wässriger Lösung definiertem pH-Fenster. Bei der Herstellung thermisch härtender Silikonharze zur Verwendung als Elektroisolationsmaterial sind in der US 4408031 als Umesterungskatalysatoren Titanatester, Kobaltsalze organischer Säuren oder organische Säuren oder Sulfonsäuren, wie vorzugsweise para-Toluolsulfonsäure oder Benzolsulfonsäure genannt.

Neben den zuvor schon aufgeführten Alkyltitanaten, wie z.B. Butyltitanat, nennt die EP 1136494 A2 auch Zinnverbindungen wie Dibutylzinndilaurat.

Festzustellen ist weiter, dass die Umesterungsreaktion an einem hochvernetzten Silikonharz eine technisch niedrige Hürde darstellt, da man selbst bei unglücklicher Auswahl eines im Stand der Technik genannten Katalysators nicht mit Nebenreaktionen wie unerwünschter Äquilibrierung oder Gerüstumlagerung konfrontiert wird.

Viel höher ist hingegen die technische Hürde angesiedelt, die sich aus der reproduzierbar sauberen Herstellung von SiOC-verknüpften Polyethersiloxanen durch Umesterung von Alkoxysiloxanen mit Polyetherolen ergibt, insbesondere, wenn die Zielprodukte als grenzflächenaktive Substanzen Eingang in sehr anspruchsvolle Anwendungen nehmen sollen. Hier sind hohe, wenn nicht gar quantitative Umsätze zwingend erforderlich um den jeweiligen Effekt zuverlässig einzustellen.

Zinkacetylacetonat $Zn(acac)_2$ ist als Katalysator für zahlreiche Reaktionen bekannt.

Die EP 34 38 158 A1 offenbart ein Verfahren zur Herstellung von SiOC-verknüpften Polyethersiloxanen durch Umesterung von Alkoxysiloxanen mit Polyetherolen in Gegenwart von Zinkacetylacetonat als Katalysator. Die Vorteile dieses Verfahrens liegt darin, dass der Einsatz von Säuren oder Basen nicht mehr erforderlich ist, die in der betrieblichen Praxis einen erhöhten Sicherheitsaufwand bei ihrer Handhabung aber auch bereits bei der Auswahl geeigneter Behältermaterialien bedingen.

Jedoch hat sich herausgestellt, dass bei dem Verfahren gemäß EP 34 38 158 A1 das Hexamethylzyklotrisiloxan (D3) als Nebenprodukt entsteht. D3 hat die Neigung, sich an Produktionsleitungen abzulagern und verursacht somit Wartungs- und Instandsetzungskosten.

Es ist daher wünschenswert, ein Verfahren bereitzustellen, das die o.g. Nachteile nicht aufweist.

Überaschenderweise wurde nun gefunden, dass angelehnt an dem Verfahren gemäß EP 34 38 158 A1 sich Trifluormethansulfonat als besonders vorzüglicher Katalysator für die Umesterung von Alkoxysiloxanen mit Polyetherolen und damit für die Herstellung chemisch komplexer Systeme eignet, insbesondere die Bildung von Hexamethylzyklotrisiloxanen kann zumindest verringert bzw. signifikant reduziert werden.

Gegenstand dieser Erfindung ist daher ein Verfahren zur Herstellung von SiOC-verknüpften Polyethersiloxanen durch Umesterung von Alkoxysiloxanen mit Polyetherolen in Gegenwart von Trifluormethansulfonat als Katalysator, wobei der kalkulatorische Gesamtwassergehalt der Reaktanden, bestehend aus Alkoxysiloxanen und Polyetherolen $\leq$ 5000 Massen-ppm, vorteilhafterweise $\leq$ 300 Massen-ppm, vorzugsweise $\leq$ 150 Massen-ppm, weiter bevorzugt $\leq$ 100 Massen-ppm, insbesondere $\leq$ 50 Massen-ppm beträgt, wobei zuvor die Bestimmung der individuellen Wassergehalte, vorzugsweise durch Titration nach Karl Fischer erfolgt

Die Anteile an Wasser lassen sich zwar durch verschiedene, an sich bekannte Methoden bestimmen. Besonders gut geeignet ist aber die Karl-Fischer-Titration, beispielsweise nach DIN 51777.

"Karl-Fischer-Titration" bezeichnet die dem Fachmann bekannte, von Karl Fischer entwickelte Methode zur quantitativen oxidimetrischen Bestimmung von Wasser. Die Analyse kann volumetrisch und, für kleinere Wassermengen (insbesondere $\leq$ 200 Massen-ppm), vorzugsweise auch coulometrisch erfolgen. Der Titrationsendpunkt gibt sich durch einen Iod-Überschuss zu erkennen, der visuell, photometrisch oder elektrometrisch angezeigt werden kann. All dies ist dem Fachmann wohlbekannt.

Im Beispielteil wird die Wasserbestimmung nach Karl Fischer in Anlehnung an DIN 51777, DGF E-III 10 und DGF C-III 13a genauer beschrieben. Die DGF Norm bezieht sich auf die "DGF-Einheitsmethoden", also das Loseblattwerk "Deutsche Einheitsmethoden zur Untersuchung von Fetten, Fettprodukten, Tensiden und verwandten Stoffen", Auflage 2 einschließlich 22. Akt.-Lfg., ISBN10:3804723470, wissenschaftliche Verlagsgesellschaft.

"Kalkulatorischer Gesamtwassergehalt" bedeutet, dass der Wassergehalt der Einzelkomponenten, umfassend Alkoxysiloxane und Polyetherole jeweils für die einzelne Komponente gesondert erfasst wird und danach zum kalkulatorischen Gesamtwassergehalt aufaddiert wird. Dieser Wassergehalt betrifft die Situation vor dem Reaktionsstart, welcher durch Temperaturerhöhung und Katalysatorzugabe eingeleitet wird.

Im Rahmen der vorliegenden Erfindung ist es besonders bevorzugt und entspricht somit einer besonders bevorzugten Ausführungsform, wenn der Gesamtwassergehalt der Reaktanden, bestehend aus Alkoxysiloxanen und Polyetherolen $\leq$ 5000 Massen-ppm, vorzugsweise $\leq$ 300 Massen-ppm, weiter bevorzugt $\leq$ 100 Massen-ppm, insbeson-

dere ≤ 50 Massen-ppm beträgt, wobei die Bestimmung des Wassergehaltes durch Titration nach Karl Fischer erfolgt, insbesondere durch coulometrische Karl Fischer Titration.

Die Vorteile des erfindungsgemäß einzusetzenden Katalysators liegen darin, dass er den Einsatz von Säuren oder Basen entbehrlich macht, die in der betrieblichen Praxis einen erhöhten Sicherheitsaufwand bei ihrer Handhabung aber auch bereits bei der Auswahl geeigneter Behältermaterialien bedingen. Ebenfalls macht der erfindungsgemäße Katalysator die sonst übliche Neutralisation von Säuren oder Basen nach beendeter Reaktion entbehrlich und vermeidet auch den mit Aufwand verbundenen Filtrationsschritt zur Abtrennung des Salzes. Zudem kann das Nebenprodukt Hexamethylzyckotrisiloxan (D3) verringert bzw. signifikant reduziert werden.

Weitere unerwünschte Effekte, die aus der Verwendung starker Säuren als Umesterungskatalysatoren erwachsen, resultieren aus der starken Dunkelverfärbung der Produkte sowie aus deren nachträglicher Äquilibrierung. Das Vergleichsbeispiel (Beispiel 8, vgl. Beispielteil weiter unten) verdeutlicht, dass man in einem Stoffsystem bestehend aus einem $\alpha,\omega$-Diethoxypolydimethylsiloxan und einem Polyetherol in Gegenwart einer katalytischen Menge an Trifluormethansulfonsäure (0,1 Gew.-% bezogen auf die Gesamtmasse der Reaktanden) zwar zu quantitativen Umsätzen gelangt, dass das isolierte Finalprodukt jedoch dunkelbraun verfärbt ist und zudem beachtliche Mengen an zyklischen Polydimethylsiloxanen ($D_4$ und $D_5$) enthält. Diese Qualitätsdefizite sind produktseitig in keiner Weise akzeptabel.

Der erfindungsgemäß einzusetzende Katalysator besitzt im Vergleich zu zinnorganischen Umesterungskatalysatoren ein weniger kritisches toxikologisches Profil. Im Vergleich zu den sonst auch vielfach eingesetzten, hydrolyseempfindlichen Titanat-Katalysatoren besitzt Triflatsalze den Vorteil der hydrolytischen Unempfindlichkeit, das heißt, Zink Triflate kann auch ohne Inertisierung in gewöhnlicher Atmosphäre portioniert, dosiert und umgefüllt werden.

Bevorzugt eignet sich Trifluormethansulfonatsalze als Katalysator für die Umesterungsreaktion von Systemen bestehend aus Alkoxypolysiloxan und Polyetherol, die Eingang nehmen in anspruchsvolle Anwendungen wie z.B. Lackadditive. Diese Additive zeigen in empfindlichen Überzugssystemen praktisch keinerlei Fehlertoleranz und sind somit sensibler Indikator für prozessual bedingte Abweichungen von der chemischen Natur des Wirkstoffes.

Überraschenderweise wurde im Rahmen dieser Erfindung festgestellt, dass sich nicht nur Polyetherole für die Umesterungsreaktion eignen, die aus der Alkoxylierungsreaktion gesättigter Startalkohole hervorgegangen sind, sondern z.B. auch diejenigen, die sich aus der Alkoxylierung ungesättigter Startalkohole, wie z.B. Allylalkohol herleiten.

Dieser Befund ist insofern speziell für SiOC-verknüpfte Silikonpolyether-Copolymere als Additive in Beschichtungssystemen von Bedeutung, da er den Einbau terminal ungesättigter Gruppen gestattet, die ihrerseits zum Beispiel in Pigment gefüllten Lack- und Bindemittelsystemen eine dispersionsstabilisierende Wirkung entfalten. Entsprechend ist die Verwendung der nach erfindungsgemäßen Verfahren hergestellten, SiOC-verknüpften Polyethersiloxane, deren Polyetherteil sich aus der Alkoxylierung ungesättigter Startalkohole, bevorzugt von Allylalkohol, herleitet, als Entschäumer und/oder Entlüfter sowie als Entschäumer- und/oder Entlüfter-Komponente in Lack- und Bindemittelsystemen ein weiterer Gegenstand der Erfindung.

Erfindungsgemäß als Umesterungskatalysator einzusetzendes Trifluormethansulfonatsalz gestattet schon unter moderaten Bedingungen den nahezu quantitativen Austausch der am Silikongerüst gebundenen Alkoxygruppen gegen Polyetherole, ohne dass Nebenreaktionen wie Äquilibrierung oder Gerüstumlagerung des eingesetzten Silikonkörpers auftreten. Insbesondere eignet sich die hochauflösende $^{29}$Si-NMR-Spektroskopie zum Auffinden derartiger unerwünschter Nebenreaktionen.

Versuchsreihen unterstreichen zudem die zuverlässige Reproduzierbarkeit der durch die Verwendung des erfindungsgemäßen Katalysators induzierten Umesterungsreaktionen, so dass er sich bereits hierdurch für die betriebliche Praxis qualifiziert.

Zeichnet sich der erfindungsgemäße Trifluormethansulfonat -Katalysator selbst zwar auch durch seine gute hydrolytische Stabilität aus, so ist in der Umesterungsreaktion vorzugsweise auf möglichst sorgfältige Einhaltung systemischer Wasserfreiheit zu achten, das heißt, sowohl das eingesetzte Alkoxygruppen aufweisende Siloxan als auch eingesetztes Polyetherol, sowie gegebenenfalls eingesetzte Lösungsmittel sind vorzugsweise möglichst wasserfrei einzusetzen und/ oder geeigneten Trocknungsverfahren zu unterziehen.

Der Gesamtwassergehalt der Reaktanden, bestehend aus Alkoxysiloxanen und Polyetherolen, beträgt ≤ 5000 Massen-ppm, vorteilhafterweise ≤ 300 Massen-ppm, vorzugsweise ≤ 150 Massen-ppm, weiter bevorzugt ≤ 100 Massen-ppm, insbesondere ≤ 50 Massen-ppm beträgt, wobei die Bestimmung des Wassergehaltes durch Titration nach Karl Fischer erfolgt.

Die Erzielung der angestrebten systemischen Wasserfreiheit bewerkstelligt der Fachmann über die gebräuchlichen Verfahren, wie z.B. den Einsatz von gebräuchlichen Trockenmitteln (wie z.B. Natriumsulfat, Calciumoxid, etc.).

Im Rahmen der vorliegenden Erfindung haben sich für die Herstellung der angestrebten Wasserfreiheit insbesondere die Azeotroptrocknung und der Strippprozess bewährt.

Demnach kommt für die Trocknung der eingesetzten Reaktionsgemische vorzugsweise die Azeotroptrocknung in Frage, bei der das zu trocknende Polyetherol und/oder Alkoxysiloxan mit einer ausreichenden Menge eines niedrig siedenden Lösungsmittels beaufschlagt wird, das mit dem aus dem Polyetherol und/oder Alkoxysiloxan stammenden Wasser ein destillativ zu entfernendes Azeotrop bildet.

Eine weitere bevorzugte Option zur Trocknung des bei der Umesterungsreaktion eingesetzten Reaktionsgemisches lässt sich über den Strippprozess realisieren, und zwar zum Beispiel dadurch, dass man durch das vorzugsweise erhitzte (z.B. auf 140°C) und mit einem Hilfsvakuum (z.B. 1 mbar) beaufschlagte Stoffsystem einen Inertgasstrom (vorzugsweise für eine Zeit von etwa 2 Stunden) durchleitet. Im Sinne einer produktschonenden Trocknung (Vermeidung oxidativer Prozesse) sind dabei Stickstoff oder Argon als einzusetzende Inertgase bevorzugt. Dieser Strippvorgang führt zu einer im Sinne der Erfindung besonders intensiven Trocknung und stellt ein bevorzugtes Trocknungsverfahren dar. Am Ende der Trocknungsphase bricht man im Rahmen einer besonders bevorzugten Ausführungsform noch in der Hitze das angelegte Hilfsvakuum durch die massive Beaufschlagung mit einem Inertgas, versetzt danach die Reaktionsmatrix mit einer katalytischen Menge an Trifluormethansulfonatsalzen, legt wieder ein Hilfsvakuum an und leitet im Verlauf (z.B. von 5 Stunden) erneut einen Strom Inertgas durch die Reaktionsmatrix, um das aus dem Alkoxypolysiloxan stammende Alkanol herauszutreiben.

Die erfindungsgemäßen Beispiele unterstreichen das zuvor Gesagte. Beispielsweise weist der im erfindungsgemäßen Beispiel 1 eingesetzte Zinktriflat-Katalysator einen Wassergehalt von 0,4 Gew.-% auf. Nach zweistündiger Umesterungsreaktion führt dies zu quantitativem Umsatz, Das Nebenprodukt Hexamethylzyklotrisiloxan D3, mittels GC-Analyse, ergab eine Menge an D3 von 1,9%-

Das Vergleichsbeispiel (Beispiel 7 = EP 34 38 158 A1) unter Verwendung des Zinkacetylacetonats führt zu einem Produkt, das hohe Menge an D3. aufweist (17,1 %).Trifluormethansulfonatsalze, Metall-Trifluormethansulfonate, Triflate, Metalltriflate werden hier als Synonyme verstanden.

Vorzugsweise wird in der erfindungsgemäßen Umesterungsreaktion das Polyetherol in Mengen von bevorzugt jeweils 0,8 bis 2,0 OH-Äquivalenten, besonders bevorzugt 0,8 bis 1,3 OH-Äquivalenten, bezogen auf jede am Silikongerüst gebundene Alkoxygruppe eingesetzt. Dies entspricht einer bevorzugten Ausführungsform der Erfindung.

Gemäß einer bevorzugten Ausführungsform der Erfindung wird die erfindungsgemäße Umesterung der Alkoxysiloxane ohne Einsatz von Lösungsmitteln durchgeführt. Im Rahmen dieser Ausführungsform werden insbesondere vorgetrocknete Edukte eingesetzt.

In einer anderen bevorzugten Ausführungsform des erfindungsgemäßen Verfahrens wird die Umesterungsreaktion in einem unter Reaktionsbedingungen inerten Lösungsmittel durchgeführt. Besonders bevorzugte Lösungsmittel sind Toluol und reinen oder als Isomerengemisch vorliegenden Xylole. Vorzugsweise führt man die Umesterungsreaktion in demjenigen Lösungsmittel durch, mit dessen Hilfe man zuvor die optionale azeotrope Trocknung einer oder mehrerer Edukte oder Systemkomponenten durchgeführt hat. Zur Sicherstellung der erfindungsgemäß angestrebten systemischen Wasserfreiheit kann man beispielsweise die bevorzugt eingesetzten Lösungsmittel auch optional einer sehr effektiven Vortrocknung zum Beispiel mit Natrium/Benzophenon sowie anschließender Destillation unter Inertgasbeaufschlagung unterziehen.

Der Gesamtwassergehalt der optionalen Lösungsmittel sollte vorteilhafterweise $\leq$ 50 Massen-ppm, vorzugsweise $\leq$ 25 Massen-ppm, besonders bevorzugt $\leq$ 10 Massen-ppm betragen, wobei die Bestimmung des Wassergehaltes vorzugsweise durch eine coulometrische Titration nach Karl Fischer erfolgt.

Lösungsmittel werden bevorzugt in Mengen von 5 bis 35 Gew.-%, vorzugsweise 10 bis 35 Gew.-%, bezogen auf die Masse der Reaktionsmatrix eingesetzt.

Ebenfalls ist es möglich die Umesterungsreaktion in Abwesenheit von Lösungsmitteln durchzuführen.

Bei Normaldruck (1013,25 hPa) wird die erfindungsgemäße Umesterungsreaktion in einem Temperaturbereich durchgeführt, der durch den Siedepunkt eines optional gewählten Lösemittels nach oben begrenzt ist. Erfindungsgemäß bevorzugt werden Umesterungstemperaturen zwischen 110 und 150°C gewählt. Dies entspricht einer bevorzugten Ausführungsform der Erfindung.

Bevorzugt wird Trifluormethansulfonatsalz in Mengen von 0,01 bis 1,0 Gewichtsprozent, weiter bevorzugt 0,07 bis 0,8 Gewichtsprozente bezogen auf die Masse der Reaktionsmatrix bestehend aus Polyetherol und Alkoxypolysilan eingesetzt.

Bevorzugt wird im Rahmen der Erfindung wasserfreies Trifluormethansulfonatsalz eingesetzt. Sollen eventuell wasserhaltige Trifluormethansulfonatsalz-Vorläuferkomplexe für das erfindungsgemäß beanspruchte Verfahren eingesetzt werden, so gilt die für den Einsatz von Polyetherol, Alkoxysiloxan und gegebenenfalls Lösungsmittel erörterte Forderung nach weitgehender Wasserfreiheit entsprechend, das heißt, vorzugsweise sollten diese Katalysatoren vor ihrer Verwendung dann noch geeignet getrocknet werden (z.B. auch durch azeotrope Trocknung). Die Präsenz am Trifluormethansulfonatsalz gebundenem Kristallwasser inhibiert dessen erfindungsgemäße Wirksamkeit nicht prinzipiell jedoch dahingehend, dass die damit katalysierten Umesterungsreaktionen verzögert ablaufen.

Im Sinne einer bevorzugten Umesterungsreaktion, die vorteilhafterweise zügig und vollständig verläuft, sollte erfindungsgemäße Trifluormethansulfonatsalze vorzugsweise Wassergehalte kleiner 7,5 Gew.-%, bevorzugt kleiner 5 Gew.-% und ganz besonders bevorzugt $\leq$ 2 Gew.-% aufweisen.

In bevorzugt einsetzbaren Verfahren handelt es sich bei dem Katalysator um ein Metall-Trifluormethansulfonat gemäß der Formel (I)

$[CF_3SO_3^-]_x[M]^{x+}$ (I)

wobei M ein Metallatom ist, ausgewählt aus Zink, Bismut, Aluminum, Eisen oder ausgewählt aus Natrium, Kalium mit der Maßgabe, dass Methansulfonsäure zugegen ist, und x eine Zahl bis zu einer Maximalvalenz des für M ausgewählten Metallatoms darstellt,

Erfindungsgemäß bevorzugt einsetzbare Alkoxypolysiloxane sind gewählt aus den Verbindungen der Formel (II) bis Formel (VI), wobei der Einsatz der Alkoxypolysiloxane gemäß Formel (II) und/oder Formel (III) besonders bevorzugt ist.

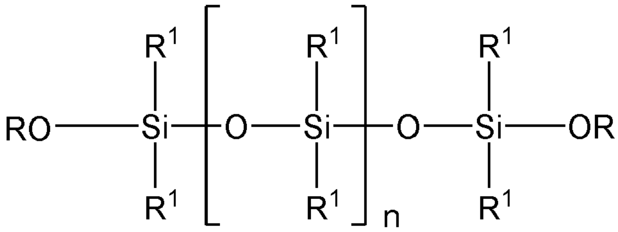

**Formel (II)**

mit $R^1$ gleich Alkyl- und/ oder Aralkyl- und / oder aromatischer Rest umfassend 1 bis 10 C-Atome,
R gleich Alkylrest umfassend 1 bis 8 C-Atome und
mit $1 \leq n \leq 250$

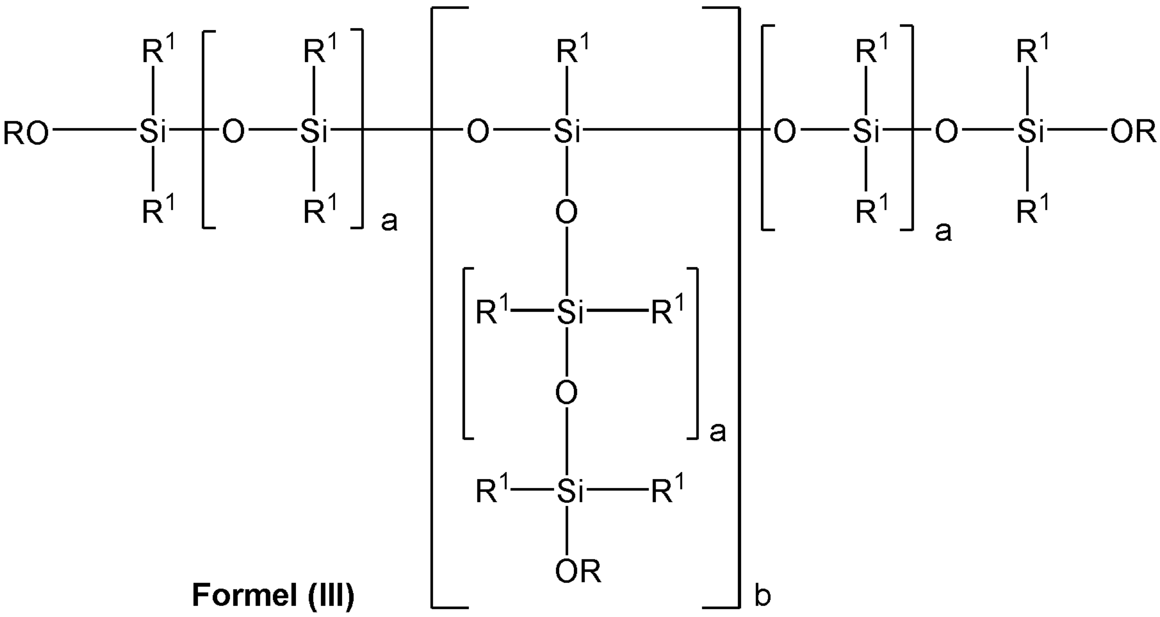

**Formel (III)**

mit $R^1$ gleich Alkyl- und/ oder Aralkyl- und / oder aromatischer Rest umfassend 1 bis 10 C-Atome,
R gleich Alkylrest umfassend 1 bis 8 C-Atome und
mit $1 \leq a \leq 60$ und
mit $0 < b \leq 10$

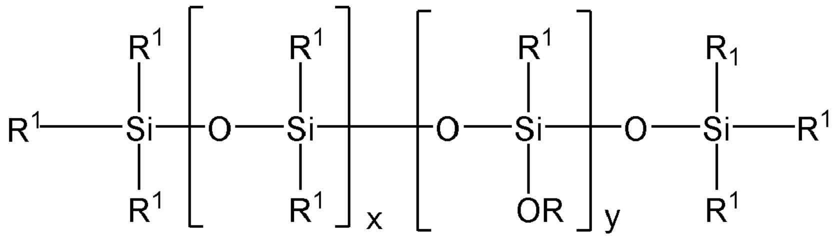

**Formel (IV)**

mit $R^1$ gleich Alkyl- und/ oder Aralkyl- und / oder aromatischer Rest umfassend 1 bis 10 C-Atome,
R gleich Alkylrest umfassend 1 bis 8 C-Atome und
mit $0 \leq x \leq 250$ und
mit $1 \leq y \leq 50$

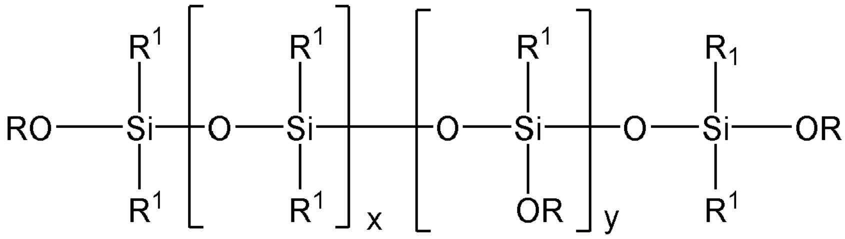

**Formel (V)**

mit $R^1$ gleich Alkyl- und/ oder Aralkyl- und / oder aromatischer Rest umfassend 1 bis 10 C-Atome,
R gleich Alkylrest umfassend 1 bis 8 C-Atome und
mit $0 \leq x \leq 250$ und
$1 \leq y \leq 50$

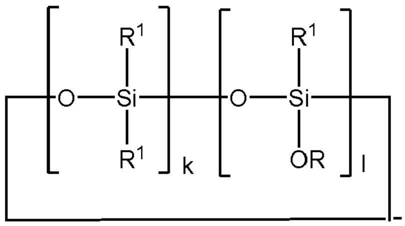

**Formel (VI)**

mit $R^1$ gleich Alkyl- und/ oder Aralkyl- und / oder aromatischer Rest umfassend 1 bis 10 C-Atome,
R gleich Alkylrest umfassend 1 bis 8 C-Atome und
mit $4 \leq (k + l) \leq 5$ und
$l \geq 1$

Die erfindungsgemäß einsetzbaren Polyetherole sind vorzugsweise solche der Formel (VII)

$$A[-O-(CH_2-CHR'-O-)_m-(CH_2-CH_2-O-)_n--(CH_2-CH(CH_3)-O-)_o-Z]_a \quad \text{(VII)}$$

mit

A Wasserstoff oder ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der Verbindung, besonders bevorzugt eine Methyl-, Ethyl-, Propyl-, Butyl-, Vinyl- oder Allylgruppe ist,

R' unabhängig voneinander eine gesättigte Alkylgruppe mit 2-18 C-Atomen ist oder ein aromatischer Rest, respektive bevorzugt eine Ethylgruppe oder ein Phenylrest,

Z Wasserstoff,

m gleich 0 bis zu 50, bevorzugt 0 bis zu 30, besonders bevorzugt 0 bis zu 20 ist

n gleich 0 bis zu 250, bevorzugt 3 bis zu 220, besonders bevorzugt 5 bis zu 200 ist

o gleich 0 bis zu 250, bevorzugt 3 bis zu 220, besonders bevorzugt 5 bis zu 200 ist

a gleich 1 bis zu 8, bevorzugt größer 1 bis zu 6, besonders bevorzugt 1, 2, 3 oder 4,

mit der Maßgabe, dass die Summe aus m, n und o gleich oder größer als 1 ist,

eingesetzt. Vorzugsweise werden Verbindungen der Formel (VII) verwendet, die ausschließlich Wasserstoffatome, Sauerstoffatome und Kohlenstoffatome aufweisen.

Die hier wiedergegebenen Indexzahlen und die Wertbereiche der angegebenen Indizes können als Mittelwerte (Gewichtsmittel) der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (VII).

Die mit m, n und o bezeichneten Einheiten können wahlweise statistisch gemischt oder auch blockweise in der Kette enthalten sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Unter dem Rest A werden im Rahmen der vorliegenden Erfindung vorzugsweise Reste von Substanzen verstanden, die den Anfang der herzustellenden Verbindung der Formeln (V) bilden, die durch die Anlagerung von Alkylenoxiden erhalten wird. Die Startverbindung ist vorzugsweise ausgewählt aus der Gruppe der Alkohole, Polyetherole oder Phenole. Bevorzugt wird als Startverbindung enthaltend die Gruppe A ein ein- oder mehrwertiger Polyetheralkohol und/oder ein- oder mehrwertiger Alkohol, oder deren beliebige Mischungen verwendet. Für den Fall, dass mehrere Startverbindungen A als Gemisch verwendet wurden, kann der Index a auch einer statistischen Verteilung unterliegen. Z kann darüber hinaus auch der Rest einer Startverbindung Z-OH sein.

Als Monomere in der Alkoxylierungsreaktion werden bevorzugt Ethylenoxid, Propylenoxid, Butylenoxid und/oder Styroloxid eingesetzt sowie beliebige Mischungen dieser Epoxide. Die unterschiedlichen Monomere können in reiner Form oder gemischt eingesetzt werden. Auch kann die Dosierung eines weiteren Epoxides zu einem bereits in der Reaktionsmischung vorliegenden Epoxides kontinuierlich über die Zeit erfolgen, so dass ein zunehmender Konzentrationsgradient des kontinuierlich zugegebenen Epoxides entsteht. Die entstehenden Polyoxyalkylene unterliegen damit einer statistischen Verteilung im Endprodukt, wobei Beschränkungen durch die Dosierung bestimmt werden können. Im hier genannten Fall der kontinuierlichen Zugabe eines weiteren Epoxides zu einem bereits in der Reaktionsmischung vorliegenden Epoxides ist dann über die Kettenlänge ein Strukturgradient zu erwarten. Die Zusammenhänge zwischen Dosierung und Produktstruktur sind dem Fachmann bekannt.

Bevorzugt werden in dem erfindungsgemäßen Verfahren als Verbindungen der Verbindungsklasse II solche eingesetzt, die eine gewichtsmittlere Molmasse von 76 bis 10.000 g/mol, bevorzugt von 100 bis 8.000 g/mol und besonders bevorzugt von 200 bis 6.000 g/mol aufweisen.

Als Verbindungen der Verbindungsklasse II können bevorzugt solche Verbindungen eingesetzt werden, die aus einer Verbindung der Formel (VIII)

$$A[-OH]a \qquad (VIII)$$

hervorgegangen sind, wobei der Rest A sich aus Verbindungen ableitet ausgewählt aus der Gruppe der ein- oder mehrwertigen Monomeren, Oligomeren oder polymeren Alkohole, Phenole, Kohlenhydrate oder Kohlenhydratderivate, wobei besonders bevorzugt solche Verbindungen der Formel (VI) eingesetzt werden, bei denen sich der Rest A von

einem oder mehreren Alkoholen aus der Gruppe von Butanol, 1-Hexenol, Octanol, Dodecanol, Stearylalkohol, Vinyloxybutanol, 2-Ethylhexanol, Zyklohexanol, Benzylalkohol, Ethylenglykol, Propylenglykol, Di-, Tri- oder Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, Allylalkohol, Vinylalkohol oder von auf Naturstoffen basierenden, Hydroxylgruppen tragenden Verbindungen ableitet.

Besonders bevorzugt werden als Verbindungen der Verbindungsklasse II solche eingesetzt, die bei einem Druck von 101325 Pa und einer Temperatur von 23 °C flüssig vorliegen. Unter diesen sind Butyldiglykol, Dipropylenglykol und Propylenglykol ganz besonders bevorzugt.

Erfindungsgemäß als Polyetherole einsetzbare Verbindungen der Formel (III) und Verfahren zu deren Herstellung werden z. B. in EP 0075703, US 3775452 und EP 1031603 beschrieben. Geeignete Verfahren bedienen sich z.B. basischer Katalysatoren wie z.B. der Alkalihydroxide und der Alkalimethylate. Besonders verbreitet und seit vielen Jahren bekannt ist der Einsatz von KOH. Typischerweise wird ein meist niedermolekularer, dass bedeutet, mit einem Molekulargewicht von kleiner als 200 g/mol, hydroxyfunktioneller Starter wie Butanol, Allylalkohol, Propylenglykol oder Glycerin in Gegenwart des alkalischen Katalysators mit einem Alkylenoxid wie Ethylenoxid, Propylenoxid, Butylenoxid oder einem Gemisch verschiedener Alkylenoxide zu einem Polyoxyalkylenpolyether umgesetzt. Die stark alkalischen Reaktionsbedingungen bei dieser sogenannten Living-Polymerisation fördern verschiedene Nebenreaktionen. Die Verbindungen der Formeln (II) können auch durch Doppelmetallcyanid-Katalyse hergestellt werden. Durch Doppelmetallcyanid-Katalyse hergestellte Polyether haben in der Regel einen besonders niedrigen Gehalt an ungesättigten Endgruppen von kleiner oder gleich 0,02 Milliäquivalenten pro Gramm Polyether-Verbindung (meq/g), bevorzugt kleiner oder gleich 0,015 meq/g, besonders bevorzugt kleiner oder gleich 0,01 meq/g (Bestimmungsmethode ASTM D2849-69), enthalten deutlich weniger Monole und haben in der Regel eine geringe Polydispersität von weniger als 1,5. Die Polydispersität (PD) kann nach einer dem Fachmann an sich bekannten Methode ermittelt werden, indem durch Gelpermeationschromatographie (GPC) sowohl das zahlenmittlere Molekulargewicht (Mn) wie auch das gewichtsmittlere Molekulargewicht (Mw) bestimmt werden. Die Polydispersität ergibt sich als PD = Mw/Mn. Die Herstellung derartiger Polyether wird z. B. in der US-A 5158922 und der EP-A 0654302 beschrieben.

Unabhängig vom Herstellungsweg sind Verbindungen der Formel (VII) bevorzugt geeignet, die vorzugsweise eine Polydispersität Mw/Mn von 1,0 bis 1,5 aufweisen, bevorzugt mit einer Polydispersität von 1,0 bis 1,3.

Abhängig vom Alkylenoxid-Terminus können die erfindungsgemäß einzusetzenden Polyetherole eine primäre oder sekundäre OH-Funktion besitzen. Unter dem Aspekt der später erzielten hydrolytischen Beständigkeit der gewonnenen SiOC-verknüpften Polyethersiloxane ist im Rahmen der erfinderischen Lehre der Einsatz von solchen Polyetherolen bevorzugt, die eine sekundäre Alkoholfunktion aufweisen.

Ein weiterer Gegenstand der Erfindung ist die Verwendung der SiOC-verknüpften Polyethersiloxane, deren Polyetherteil sich aus der Alkoxylierung ungesättigter Startalkohole, bevorzugt von Allylalkohol, Butanol oder Dipropylengykol, herleitet als PU Schaumstabilisator, Entschäumer und/oder Entlüfter sowie als Entschäumer- und/oder Entlüfter-Komponente in Lack- und Bindemittelsystemen.

Die folgenden Beispiele dienen dem Fachmann allein zur Erläuterung dieser Erfindung und stellen keinerlei Beschränkung des beanspruchten Verfahrens dar. Die erfindungsgemäße Bestimmung der Wassergehalte erfolgt grundsätzlich mit der Karl-Fischer-Methode in Anlehnung an DIN 51777, DGF E-III 10 und DGF C-III 13a, und zwar insbesondere wie im Beispielteil ausführlich beschrieben. Die $^{29}$Si-NMR-Spektroskopie diente in allen Beispielen der Reaktionsverfolgung im Hinblick auf die Vollständigkeit der Umesterungsreaktion.

**Beispiele**

Der kalkulatorische Gesamtwassergehalt der Reaktanden, bestehend aus Alkoxysiloxanen und Polyetherolen, lag in den erfindungsgemäßen Beispielen vor Zugabe des Zinkacetylacetonats jeweils unter 300 Massen-ppm, wobei zuvor die Bestimmung der individuellen Wassergehalte durch Titration nach Karl Fischer erfolgte.

**Wasserbestimmung nach Karl Fischer**

In Anlehnung an DIN 51777, DGF E-III 10 und DGF C-III 13a

Der Wassergehalt ist die nach der folgenden Methode aus dem Iodverbrauch errechnete Wassermenge. Die Probe wird in Gegenwart von Methanol mit einer Lösung, die Schwefeldioxid und Iod enthält, titriert. Da Schwefeldioxid und Iod nur in Gegenwart von Wasser zu äquivalenten Mengen Schwefeltrioxid und Iodwasserstoff reagieren, kann aus dem Iodverbrauch der Wassergehalt in Gewichts-Prozenten berechnet werden.

$$J_2 + SO_2 + H_2O = 2\ HJ + SO_3$$

Alle Reagenzien, wenn nicht anders erwähnt, haben die Reinheit: z.A.

Karl Fischer Lösung : Hydranal Composite 5 , Riedel de Haen; 34805
Methanol z.A.;
Chloroform z.A.;
Karl Fischer Titrierautomat ; (z.B. Metrohm; KF-Titrino 701 oder 758)
Titrierstand; Metrohm.
Wechseleinheit 20 ml mit Keramikhahn
Magnetrührstäbchen, 25mm; z.B. Metrohm.
Doppel-Pt-Elektrode; Metrohm.
Analysenwaage; z.B. Sartorius $AC_2$10S
Trockenröhrchen mit aktivierten Molekularsieben ; Metrohm.

Die Molekularsiebe sollten bei jedem Wechsel der Titrationslösung gewechselt werden. Die Regenerierung der Molekularsiebe erfolgt im Trockenschrank bei 180 - 240°C über 48 Stunden.

Durchführung

Die Probe ist durch gründliches Verrühren zu homogenisieren.
In einem Titriergefäß werden Methanol oder Methanol / Chloroform (1:1) vorgelegt (Füllhöhe 1/3 bis ¼ des Gefäßes) und mit Composite 5 austitriert. Eine geeignete Einwaage der zu bestimmenden Probe wird über eine Analysenwaage direkt oder mit einer Einmalspritze über Differenzwägung in das Titriergefäß eingewogen. Man titriert bis zum elektrometrischen Endpunkt.
Auswertung

$$\frac{V \times F}{10 \times E} = \text{Wassergehalt [Gew.-\%]}$$

V = Verbrauch Composite 5 Lösung (ml)
F = Faktor der Composite 5 Lösung
E = Einwaage Probe (g)

Die **$^{29}$Si-NMR-Proben** werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in $CDCl_3$ und gegen Tetramethylsilan (TMS) als externem Standard [d($^{29}$Si) = 0,0 ppm] gemessen.
Die GPC's **(Gel-Permeations-Chromatographie)** werden unter Verwendung von THF als mobiler Phase an einer Säulenkombination SDV 1000/10000A, Länge 65 cm, ID 0,80 bei einer Temperatur von 30°C an einem SECcurity$^2$ GPC System 1260 (PSS Polymer Standards Service GmbH) aufgenommen.
Die **Gaschromatogramme** werden an einem GC-Gerät des Typs GC 7890B der Fa. Agilent Technologies ausgestattet mit einer Säule vom Typ HP-1; 30m x 0,32mm ID x 0,25µm dF (Agilent Technologies Nr. 19091Z-413E) und Wasserstoff als Trägergas mit folgenden Parametern aufgenommen:

Detektor: FID; 310°C
Injektor: Split; 290°C
Mode: constant flow 2 mL/min
Temperaturprogramm: 60°C mit 8°C/min -150°C mit 40°C/min - 300°C 10 min.

Als Indikator für das Erreichen des Äquilibriergleichgewichtes wird der gaschromatographisch bestimmte Gesamtzyklengehalt definiert als die Summe der $D_4$-, $D_5$-, $D_6$-Gehalte bezogen auf die Siloxanmatrix und festgestellt nach der Derivatisierung der verzweigten Acetoxygruppen tragenden Siloxane zu den entsprechenden verzweigten, Isopropoxygruppen tragenden Siloxanen herangezogen. Die Derivatisierung zu den den verzweigten, Isopropoxygruppen tragenden Siloxanen wird hierbei bewusst gewählt, um eine unter den Bedingungen der gaschromatographischen Analyse gegebenenfalls erfolgende, thermisch induzierte Rückspaltungsreaktion der verzweigten, Acetoxygruppen tragenden Siloxane zu verhindern (zur Rückspaltungsreaktion siehe u.a. J. Pola et al., Collect. Czech. Chem. Commun. 1974,

39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

**Beispiel 1 (erfindungsgemäß)**

In einem 500-ml-Vierhalsrundkolben mit KPG-Rührer, Innenthermometer, Gaseinleitungsrohr sowie aufgesetzter Destillationsbrücke wurden 60,0 g (0,05 mol) eines $\alpha,\omega$-Diethoxypolydimethylsiloxans zusammen mit einer äquivalenten Menge (bezogen. auf Ethoxy-Gruppen) eines Butanol-gestarteten Polyetherols (Propylenoxid-Anteil von 100%) mit einer Molmasse von 1870 g/ mol (Molmasse bestimmt nach OH-Zahl) unter Rühren und Anlegen eines Ölpumpenvakuums von 1 mbar für 2 Stunden auf 140°C erhitzt, wobei mit Hilfe des Gaseinleitungsrohrs ein Argonstrom von etwa 3 l/Stunde durch die Eduktmischung geleitet wurde.
Man brach das Hilfsvakuum durch das Anlegen eines massiven Argonstroms und trug unter Inertisierung in die so vorgetrocknete, erhitzte Reaktionsmatrix 0,17 g festen Zinktriflat (Wassergehalt im Katalysator betrug 0,4 Gew.-%) ein. Die Zugabe erfolgte bei 150°C und die Temperatur wurde entsprechend gehalten.
Erneut wurde ein Hilfsvakuum von 1 mbar angelegt und ein Argonstrom von etwa 3 l/Stunde für einen Zeitraum von 5 Stunden durch die Reaktionsmischung geleitet.
Nach Erkalten des Reaktionsansatzes und erneutem Aufheben des Hilfsvakuums durch Argoneinleitung isolierte man bei quantitativem Alkoxy-Umsatz ($^{29}$Si-NMR-Spektroskopie) ein leicht trübes, SiOC-verknüpftes Polyethersiloxan.
Entsprechende GC Analysen von dem Destillat wurden durchgeführt und folgende Werte bestimmt für D3, D4, D5, D6 und Ethanol.

| GC vom Destillat | | | | |
|---|---|---|---|---|
| %D3 | % D4 | %D5 | %D6 | % Ethanol |
| 1,9 | 23,7 | 37,3 | 4,6 | 32,5 |

**Beispiel 2 (erfindungsgemäß)**

In einem 500-ml-Vierhalsrundkolben mit KPG-Rührer, Innenthermometer, Gaseinleitungsrohr sowie aufgesetzter Destillationsbrücke wurden 100,0 g (0,103 mol) eines $\alpha,\omega$-Diethoxypotydimethytsitoxans zusammen mit einer äquivalenten Menge (bezogen auf Ethoxy-Gruppen) eines Allylalkohol-gestarteten Polyetherols (Propylenoxid-Anteil von 100%) mit einer Molmasse von 501 g/mol (Molmasse bestimmt nach OH-Zahl) unter Rühren und Anlegen eines Ölpumpenvakuums von 1 mbar für 2 Stunden auf 130°C erhitzt, wobei mit Hilfe des Gaseinleitungsrohrs ein Argonstrom von etwa 3 l/Stunde durch die Eduktmischung geleitet wurde.
Man brach das Hilfsvakuum durch das Anlegen eines massiven Argonstroms und trug unter Inertisierung in die so vorgetrocknete, erhitzte Reaktionsmatrix 0,14 g festen Zinktriflat (Wassergehalt im Katalysator betrug 2,0 Gew.-%) ein. Die Zugabe erfolgte bei 130°C und die Temperatur wurde entsprechend gehalten. Erneut wurde ein Hilfsvakuum von 1 mbar angelegt und ein Argonstrom von etwa 3 l/Stunde für einen Zeitraum von 5 Stunden durch die Reaktionsmischung geleitet.
Nach Erkalten des Reaktionsansatzes und erneutem Aufheben des Hilfsvakuums durch Argoneinleitung isolierte man bei einem mittels $^{29}$Si-NMR-Spektroskopie bestimmten Alkoxy-Umsatz von 94 % ein leicht trübes, SiOC-verknüpftes Polyethersiloxan.

**Beispiel 3 (erfindungsgemäß)**

In einem 500-ml-Vierhalsrundkolben mit KPG-Rührer, Innenthermometer, Gaseinleitungsrohr sowie aufgesetzter Destillationsbrücke wurden 100,0 g (0,103 mol) eines $\alpha,\omega$-Diethoxypotydimethytsitoxans zusammen mit einer äquivalenten Menge (bez. auf die Ethoxy-Gruppen) Allylalkohol-gestarteten Polyetherols (Ethylenoxid-Anteil von 100%) mit einer Molmasse von 387 g/ mol (Molmasse bestimmt nach OH-Zahl) unter Rühren und Anlegen eines Ölpumpenvakuums von 1 mbar für 2 Stunden auf 140°C erhitzt, wobei mit Hilfe des Gaseinleitungsrohrs ein Argonstrom von etwa 3 l/Stunde durch die Eduktmischung geleitet wurde.
Man brach das Hilfsvakuum durch das Anlegen eines massiven Argonstroms und trug unter Inertisierung in die so vorgetrocknete, erhitzte Reaktionsmatrix 0,13 g festen Zinktriflat (Wassergehalt im Katalysator betrug 2,0 %) ein. Die Zugabe erfolgte bei 140°C und die Temperatur wurde entsprechend gehalten.
Erneut wurde ein Hilfsvakuum von 1 mbar angelegt und ein Argonstrom von etwa 3 l/Stunde für einen Zeitraum von 5 Stunden durch die Reaktionsmischung geleitet.

Nach Erkalten des Reaktionsansatzes und erneutem Aufheben des Hilfsvakuums durch Argoneinleitung isolierte man bei einem mittels $^{29}$Si-NMR-Spektroskopie bestimmten Alkoxy-Umsatz von 99 % ein leicht trübes, leicht gelbes SiOC-verknüpftes Polyethersiloxan.

**Beispiel 4 (erfindungsgemäß)**

In einem 500-ml-Vierhalsrundkolben mit KPG-Rührer, Innenthermometer, Gaseinleitungsrohr sowie aufgesetzter Destillationsbrücke wurden 60,0 g (0,065 mol) eines einfach verzweigten Triethoxypolydimethylsiloxans zusammen mit einer äquimolaren Menge (bez. auf Ethoxy-Gruppen) eines Allylalkohol-gestarteten Polyetherols (Propylenoxid-Anteil von 80%, Ethylenoxid-Anteil von 20%) mit einer Molmasse von 500 g/ mol (Molmasse bestimmt nach OH-Zahl) unter Rühren und Anlegen eines Ölpumpenvakuums von 1 mbar für 2 Stunden auf 140°C erhitzt, wobei mit Hilfe des Gaseinleitungsrohrs ein Argonstrom von etwa 3 l/Stunde durch die Eduktmischung geleitet wurde.

Man brach das Hilfsvakuum durch das Anlegen eines massiven Argonstroms und trug unter Inertisierung in die so vorgetrocknete, erhitzte Reaktionsmatrix 0,14g (0,09 Gew.-%) festen Zinktriflat (Wassergehalt im Katalysator betrug 2,0 %) ein. Die Zugabe erfolgte bei 140°C und die Temperatur wurde entsprechend gehalten.

Erneut wurde ein Hilfsvakuum von 1 mbar angelegt und ein Argonstrom von etwa 3 l/Stunde für einen Zeitraum von 8 Stunden durch die Reaktionsmischung geleitet.

Nach Erkalten des Reaktionsansatzes und erneutem Aufheben des Hilfsvakuums durch Argoneinleitung isolierte man bei einem Alkoxy-Umsatz von 99 % ein leicht trübes, leicht gelbes SiOC-verknüpftes Polyethersiloxan, das die angestrebte Zielstruktur zuweist. Die Ermittlung des Umsatzes erfolgte mittels $^{29}$Si-NMR-Spektroskopie.

Beispiel 5 (erfindungsgemäß)

In einem 500-ml-Vierhalsrundkolben mit KPG-Rührer, Innenthermometer, Gaseinleitungsrohr sowie aufgesetzter Destillationsbrücke wurden 60,0 g (0,05 mol) eines $\alpha,\omega$-Diethoxypotydimethytsitoxans zusammen mit einer äquivalenten Menge (bezogen. auf Ethoxy-Gruppen) eines Butanol-gestarteten Polyetherols (Propylenoxid-Anteil von 100%) mit einer Molmasse von 1870 g/ mol (Molmasse bestimmt nach OH-Zahl) unter Rühren und Anlegen eines Ölpumpenvakuums von 1 mbar für 2 Stunden auf 140°C erhitzt, wobei mit Hilfe des Gaseinleitungsrohrs ein Argonstrom von etwa 3 l/Stunde durch die Eduktmischung geleitet wurde.

Man brach das Hilfsvakuum durch das Anlegen eines massiven Argonstroms und trug unter Inertisierung in die so vorgetrocknete, erhitzte Reaktionsmatrix 0,30 g festen Natrium Triflat und 0,15 g Methansulfonsäure ein. Die Zugabe erfolgte bei 140-150°C und die Temperatur wurde entsprechend gehalten.

Erneut wurde ein Hilfsvakuum von 1 mbar angelegt und ein Argonstrom von etwa 3 l/Stunde für einen Zeitraum von 5 Stunden durch die Reaktionsmischung geleitet.

Nach Erkalten des Reaktionsansatzes und erneutem Aufheben des Hilfsvakuums durch Argoneinleitung isolierte man bei quantitativem Alkoxy-Umsatz (29Si-NMR-Spektroskopie) fast klares, SiOC-verknüpftes Polyethersiloxan.

Beispiel 6 (erfindungsgemäß)

In einem 500-ml-Vierhalsrundkolben mit KPG-Rührer, Innenthermometer, Gaseinleitungsrohr sowie aufgesetzter Destillationsbrücke wurden 60,0 g (0,05 mol) eines $\alpha,\omega$-Diethoxypotydimethytsitoxans zusammen mit einer äquivalenten Menge (bezogen. auf Ethoxy-Gruppen) eines Butanol-gestarteten Polyetherols (Propylenoxid-Anteil von 100%) mit einer Molmasse von 1870 g/ mol (Molmasse bestimmt nach OH-Zahl) unter Rühren und Anlegen eines Ölpumpenvakuums von 1 mbar für 2 Stunden auf 140°C erhitzt, wobei mit Hilfe des Gaseinleitungsrohrs ein Argonstrom von etwa 3 l/Stunde durch die Eduktmischung geleitet wurde.

Man brach das Hilfsvakuum durch das Anlegen eines massiven Argonstroms und trug unter Inertisierung in die so vorgetrocknete, erhitzte Reaktionsmatrix 0,30 g festen Kalium Triflat und 0,15 g

Methansulfonsäure ein. Die Zugabe erfolgte bei 140-150°C und die Temperatur wurde entsprechend gehalten.

Erneut wurde ein Hilfsvakuum von 1 mbar angelegt und ein Argonstrom von etwa 3 l/Stunde für einen Zeitraum von 5 Stunden durch die Reaktionsmischung geleitet.

Nach Erkalten des Reaktionsansatzes und erneutem Aufheben des Hilfsvakuums durch Argoneinleitung isolierte man bei quantitativem Alkoxy-Umsatz (29Si-NMR-Spektroskopie) fast klares, SiOC-verknüpftes Polyethersiloxan.

**Beispiel 7 (nicht erfindungsgemäß)**

In Analogie zu Beispiel 2 wurden in einem 500-ml-Vierhalsrundkolben mit KPG-Rührer, Innenthermometer, Gaseinleitungsrohr sowie aufgesetzter Destillationsbrücke 100,0 g (0,103 mol) eines $\alpha,\omega$-Diethoxypolydimethylsiloxans zusammen mit einer äquivalenten Menge (bez. auf Ethoxy-Gruppen) eines Allylalkohol-gestarteten Polyetherols (Polypropylenoxyd-Anteil von 100%) mit einer Molmasse von 501 g/ mol (Molmasse bestimmt nach OH-Zahl, Wassergehalt betrug 0,2 %) vorgelegt und unter Rühren auf 130°C erhitzt.

Sobald die Reaktionstemperatur erreicht war, wurden 0,14 g festen Zinkacetylacetonats (Wassergehalt 2,0 %) eingetragen und das Reaktionsgemisch unter Rühren und Anlegen eines Ölpumpenvakuums von 1 mbar für 5 Stunden auf 130°C erhitzt. Die Temperatur wurde entsprechend gehalten.

Dabei wurde mit Hilfe des Gaseinleitungsrohrs ein Argonstrom von etwa 3 l/Stunde durch die Reaktionsmischung geleitet. Nach Erkalten des Reaktionsansatzes und erneutem Aufheben des Hilfsvakuums durch Argoneinleitung isolierte man bei quantitativem Alkoxy-Umsatz (29Si-NMR-Spektroskopie) fast klares, SiOC-verknüpftes Polyethersiloxan.

Entsprechende GC Analysen von dem Destillat wurden durchgeführt und folgende Werte bestimmt für D3, D4, D5, D6 und Ethanol.

| GC vom Destillat | | | | |
|---|---|---|---|---|
| %D3 | % D4 | %D5 | %D6 | % Ethanol |
| 17,1 | 29,7 | 10,4 | 11,2 | 31,6 |

**Beispiel 8 (nicht erfindungsgemäß)**

In einem 500-ml-Vierhalsrundkolben mit KPG-Rührer, Innenthermometer, Gaseinleitungsrohr sowie aufgesetzter Destillationsbrücke wurden 142,1 g (0,119 mol) eines $\alpha,\omega$-Diethoxypotydimethytsitoxans zusammen mit einer äquimolaren Menge (bez. auf Ethoxy-Gruppen) eines Butanol-gestarteten Polyetherols (80% Propylenoxid-Anteil, 20% Ethylenoxid-Anteil) mit einer Molmasse von 484 g/ mol (Molmasse betimmt nach OH-Zahl) unter Rühren und Anlegen eines Ölpumpenvakuums von 1 mbar für 2 Stunden auf 10°C erhitzt, wobei mit Hilfe des Gaseinleitungsrohrs ein Argonstrom von etwa 3 l/Stunde durch die Eduktmischung geleitet wurde.

Man ließ auf 100°C abkühlen und brach das Hilfsvakuum durch das Anlegen eines massiven Argonstroms und gab unter Inertisierung mit Hilfe einer Hamilton-Spritze (0,15 ml = 0,1 Gew.-%) Trifluormethansulfonsäure in die so vorgetrocknete, erhitzte Reaktionsmatrix.

Bei 100°C Innentemperatur und unter ständigem Rühren wurde erneut ein Hilfsvakuum von 250 mbar angelegt und ein Argonstrom von etwa 3 l/Stunde für einen Zeitraum von 9 Stunden durch die Reaktionsmischung geleitet.

Zur Neutralisation der Trifluormethansulfonsäure wurden unter Rühren 1,88 g $Na_2CO_3 \cdot H_2O$ sowie 3,5 g $NaHCO_3$ hinzugegeben. Man ließ 2 Stunden reagieren, trennte die Salze durch Filtration ab und destillierte das Filtrat 2 Stunden lang bei 130°C und einem Druck von 1 mbar um Siloxanzyklen ($D_4$/$D_5$) zu entfernen.

Isoliert wurde ein klares, jedoch braun-schwarz verfärbtes Material, das gemäß $^{z9}$Si-NMR- Spektroskopie quantitativen Alkoxy-Umsatz aufweist.

**Beispiel 9 (nicht erfindungsgemäß)**

In einem 500-ml-Vierhalsrundkolben mit KPG-Rührer, Innenthermometer, Gaseinleitungsrohr sowie aufgesetzter Destillationsbrücke wurden 100,0 g (0,103 mol) eines $\alpha,\omega$-Diethoxypotydimethytsitoxans zusammen mit einer äquimolaren Menge (bez. auf Ethoxy-Gruppen) eines Butanol-gestarteten Polyetherols (Propylenoxid-Anteil von 100%) mit einer Molmasse von 1870 g/ mol (Molmasse bestimmt nach OH-Zahl) unter Rühren und Anlegen eines Ölpumpenvakuums von 1 mbar für 2 Stunden auf 140°C erhitzt, wobei mit Hilfe des Gaseinleitungsrohrs ein Argonstrom von etwa 3 l/Stunde durch die Eduktmischung geleitet wurde.

Man brach das Hilfsvakuum durch das Anlegen eines massiven Argonstroms und trug unter Inertisierung in die so vorgetrocknete, erhitzte Reaktionsmatrix 0,48 g Titan(IV)butoxids (Fa. Fluka) ein. Die Zugabe erfolgte bei 140°C und die Temperatur wurde entsprechend gehalten.

Erneut wurde ein Hilfsvakuum von 1 mbar angelegt und ein Argonstrom von etwa 3 l/Stunde durch die Reaktionsmischung geleitet. Nach 5 Stunden Reaktionszeit wurde ein heterogenes zweiphasiges Produkt erhalten, sodass auf die Analytik verzichtet wurde.

**Beispiel 10 (nicht erfindungsgemäß)**

In einem 500-ml-Vierhalsrundkolben mit KPG-Rührer, Innenthermometer, Gaseinleitungsrohr sowie aufgesetzter Destillationsbrücke wurden 100,0 g (0,103 mol) eines $\alpha,\omega$-Diethoxypotydimethytsitoxans zusammen mit einer äquimolaren Menge (bez. auf Ethoxy-Gruppen) eines Butanol-gestarteten Polyetherols (Propylenoxid-Anteil von 80%, Ethylenoxid-Anteil von 20%) mit einer Molmasse von 484 g/ mol (Molmasse betimmt nach OH-Zahl) unter Rühren und

Anlegen eines Ölpumpenvakuums von 1 mbar für 2 Stunden auf 140°C erhitzt, wobei mit Hilfe des Gaseinleitungsrohrs ein Argonstrom von etwa 3 l/Stunde durch die Eduktmischung geleitet wurde.

Man brach das Hilfsvakuum durch das Anlegen eines massiven Argonstroms und trug unter Inertisierung in die so vorgetrocknete, erhitzte Reaktionsmatrix 0,199 g festen Zirconium(IV)acetylacetonats (Sigma-Aldrich) ein. Die Zugabe erfolgte bei 140°C und die Temperatur wurde entsprechend gehalten.

Erneut wurde ein Hilfsvakuum von 1 mbar angelegt und ein Argonstrom von etwa 3 l/Stunde durch die Reaktionsmischung geleitet. Nach 5 Stunden Reaktionszeit wurde ein heterogenes zweiphasiges Produkt erhalten, sodass auf die Analytik verzichtet wurde.

**Beispiel 11 (nicht erfindungsgemäß)**

In einem 500-ml-Vierhalsrundkolben mit KPG-Rührer, Innenthermometer, Gaseinleitungsrohr sowie aufgesetzter Destillationsbrücke wurden 100,0 g (0,103 mol) eines α,ω-Diethoxypotydimethytsitoxans zusammen mit einer äquimolaren Menge (bez. auf Ethoxy-Gruppen) eines Butanol-gestarteten Polyetherols (Propylenoxid-Anteil von 80%, Ethylenoxid-Anteil von 20%) mit einer Molmasse von 484 g/ mol (Molmasse betimmt nach OH-Zahl) unter Rühren und Anlegen eines Ölpumpenvakuums von 1 mbar für 2 Stunden auf 130°C erhitzt, wobei mit Hilfe des Gaseinleitungsrohrs ein Argonstrom von etwa 3 l/Stunde durch die Eduktmischung geleitet wurde.

Man brach das Hilfsvakuum durch das Anlegen eines massiven Argonstroms und trug unter Inertisierung in die so vorgetrocknete, erhitzte Reaktionsmatrix 3,99 g Zirconium(IV)acetylacetonat-Lösung (5 %-ig in THF) ein. Die Zugabe erfolgte bei 130°C und die Temperatur wurde entsprechend gehalten.

Erneut wurde ein Hilfsvakuum von 1 mbar angelegt und ein Argonstrom von etwa 3 l/Stunde durch die Reaktionsmischung geleitet. Nach 5 Stunden Reaktionszeit wurde ein heterogenes zweiphasiges Produkt erhalten, sodass auf die Analytik verzichtet wurde.

## Patentansprüche

1. Verfahren zur Herstellung von SiOC-verknüpften Polyethersiloxanen durch Umesterung von Alkoxysiloxanen mit Polyetherolen in Gegenwart von Trifluormethansulfonatsalzen als Katalysator, wobei der kalkulatorische Gesamtwassergehalt der Reaktanden, bestehend aus Alkoxysiloxanen und Polyetherolen $\leq$ 5000 Massen-ppm, vorteilhafterweise $\leq$ 300 Massen-ppm, vorzugsweise $\leq$ 150 Massen-ppm, weiter bevorzugt $\leq$ 100 Massen-ppm, insbesondere $\leq$ 50 Massen-ppm beträgt, wobei zuvor die Bestimmung der individuellen Wassergehalte, vorzugsweise durch Titration nach Karl Fischer erfolgt.

2. Verfahren nach Anspruch 1, **dadurch gekennzeichnet, dass** es sich bei dem Katalysator um ein Metall-Trifluormethansulfonat gemäß der Formel (I)

$$[CF_3SO_3^-]_x[M]^{x+}$$

wobei M ein Metallatom ist, ausgewählt aus Zink, Bismut, Aluminium, Eisen oder ausgewählt aus Natrium, Kalium mit der Maßgabe, dass Methansulfonsäure zugegen ist, und x eine Zahl bis zu einer Maximalvalenz des für M ausgewählten Metallatoms darstellt,
handelt.

3. Verfahren nach Anspruch 1 oder 2, **dadurch gekennzeichnet, dass** der Katalysator in Mengen von 0,01 bis 1,0 Gewichtsprozent, bevorzugt 0,07 bis 0,8 Gewichtsprozent bezogen auf die Masse der Reaktionsmatrix bestehend aus Polyetherol und Alkoxysiloxan eingesetzt wird.

4. Verfahren nach zumindest einem der Ansprüche 1 bis 3, **dadurch gekennzeichnet, dass** das Polyetherol in Mengen von bevorzugt jeweils 0,8 bis 2,0 OH-Äquivalenten, besonders bevorzugt 0,8 bis 1,3 OH-Äquivalenten, bezogen auf jede am Silikongerüst gebundene Alkoxygruppe, eingesetzt wird.

5. Verfahren nach zumindest einem der Ansprüche 1 bis 4, **dadurch gekennzeichnet, dass** die Alkoxysiloxane zumindest einer der Formeln (II) bis (VI) genügen:

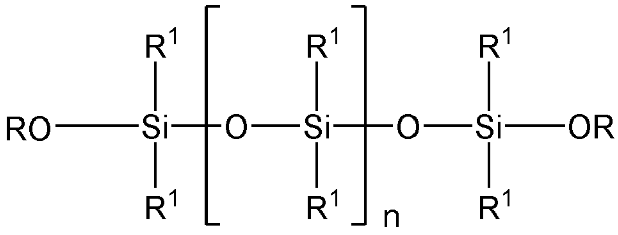

**Formel (II)**

mit $R^1$ gleich Alkyl- und/ oder Aralkyl- und / oder aromatischer Rest, umfassend 1 bis 10 C-Atome,
R gleich Alkylrest, umfassend 1 bis 8 C-Atome und
mit $1 \leq n \leq 250$
und/ oder

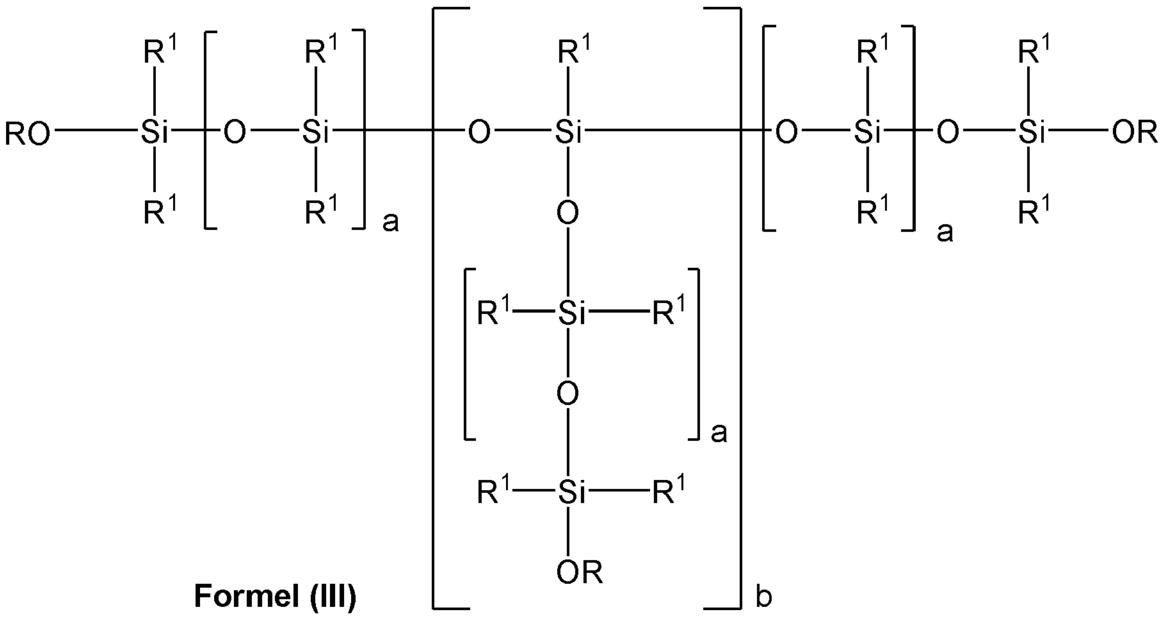

**Formel (III)**

mit $R^1$ gleich Alkyl- und/ oder Aralkyl- und / oder aromatischer Rest, umfassend 1 bis 10 C-Atome,
R gleich Alkylrest, umfassend 1 bis 8 C-Atome und
mit $1 \leq a \leq 60$ und
mit $0 < b \leq 10$
und/ oder

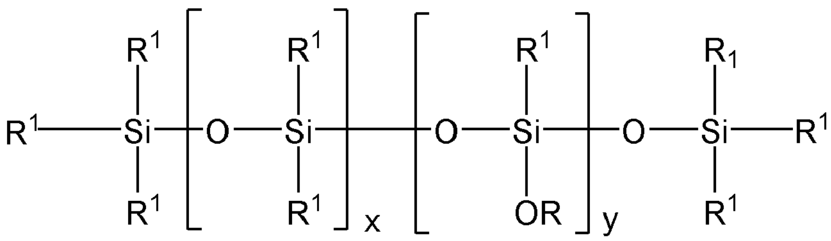

**Formel (IV)**

mit $R^1$ gleich Alkyl- und/ oder Aralkyl- und / oder aromatischer Rest, umfassend 1 bis 10 C-Atome,
R gleich Alkylrest, umfassend 1 bis 8 C-Atome und

mit $0 \leq x \leq 250$ und
mit $1 \leq y \leq 50$
und/ oder

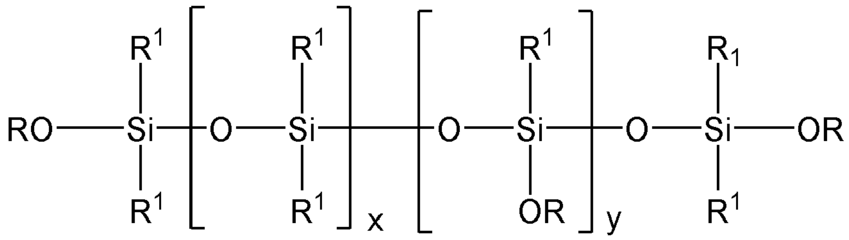

**Formel (V)**

mit $R^1$ gleich Alkyl- und/ oder Aralkyl- und / oder aromatischer Rest, umfassend 1 bis 10 C-Atome,
R gleich Alkylrest, umfassend 1 bis 8 C-Atome und
mit $0 \leq x \leq 250$ und
$1 \leq y \leq 50$
und/ oder

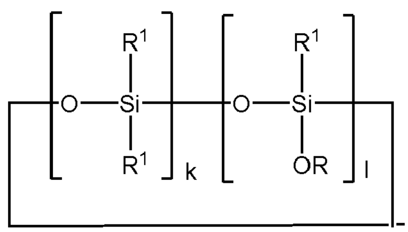

**Formel (VI)**

mit $R^1$ gleich Alkyl- und/ oder Aralkyl- und / oder aromatischer Rest, umfassend 1 bis 10 C-Atome,
R gleich Alkylrest, umfassend 1 bis 8 C-Atome und
mit $4 \leq (k + l) \leq 5$ und
$l \geq 1$

6. Verfahren nach zumindest einem der Ansprüche 1 bis 5, **dadurch gekennzeichnet, dass** die Alkoxysiloxane bevorzugt Verbindungen der Formel (II) und/oder Formel (III) sind.

7. Verfahren nach zumindest einem der Ansprüche 1 bis 6, **dadurch gekennzeichnet, dass** die eingesetzten Polyetherole vorzugsweise solche der Formel (VII)

$$A[-O-(CH_2-CHR'-O-)_m-(CH_2-CH_2-O-)_n--(CH_2-CH(CH_3)-O-)_o-Z]_a \qquad (VII)$$

mit
Aentweder Wasserstoff oder ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der Verbindung, besonders bevorzugt eine Methyl-, Ethyl-, Propyl-, Butyl-, Vinyl- oder Allylgruppe ist,

R' unabhängig voneinander eine gesättigte Alkylgruppe mit 2-18 C-Atomen ist oder ein aromatischer Rest, respektive bevorzugt eine Ethylgruppe oder ein Phenylrest,
Z Wasserstoff,
m gleich 0 bis zu 50, bevorzugt 0 bis zu 30, besonders bevorzugt 0 bis zu 20 ist n gleich 0 bis zu 250, bevorzugt 3 bis zu 220, besonders bevorzugt 5 bis zu 200 ist o gleich 0 bis zu 250, bevorzugt 3 bis zu 220, besonders bevorzugt 5 bis zu 200 ist a gleich 1 bis zu 8, bevorzugt größer 1 bis zu 6, besonders bevorzugt 1, 2, 3 oder 4, mit der Maßgabe, dass die Summe aus m, n und o gleich oder größer als 1 ist, eingesetzt.

8. Verfahren nach zumindest einem der Ansprüche 1 bis 7, **dadurch gekennzeichnet, dass** Verbindungen der Formel (VII) verwendet wird, die ausschließlich Wasserstoffatome, Sauerstoffatome und Kohlenstoffatome aufweisen.

9. Verfahren nach zumindest einem der Ansprüche 1 bis 8, **dadurch gekennzeichnet, dass** die Umesterung der Alkoxysiloxane ohne Einsatz von Lösungsmitteln durchgeführt wird.

10. Verfahren nach zumindest einem der Ansprüche 1 bis 8, **dadurch gekennzeichnet, dass** die Umesterung der Alkoxysiloxane in einem unter Reaktionsbedingungen inerten Lösungsmittel durchgeführt wird, wobei bevorzugte Lösungsmittel Toluol und/oder die reinen oder als Isomerengemisch vorliegenden Xylole sind, und wobei diese Lösungsmittel bevorzugt in Gesamtmengen von 5 bis 35 Gew.-%, vorzugsweise 10 bis 35 Gew.-%, bezogen auf die Masse der Reaktionsmatrix eingesetzt werden, und wobei der Gesamtwassergehalt der Lösungsmittel $\leq 50$ Massen-ppm, vorzugsweise $\leq 25$ Massen-ppm, besonders bevorzugt $\leq 10$ Massen-ppm beträgt, wobei die Bestimmung des Wassergehaltes durch Titration nach Karl Fischer erfolgt.

11. Verfahren nach einem der Ansprüche 1 bis 10, **dadurch gekennzeichnet, dass** die Umesterungsreaktion im Temperaturbereich von 80 bis 180°C, bevorzugt 110 bis 150°C durchgeführt wird.

12. Verfahren nach zumindest einem der Ansprüche 1 bis 11, **dadurch gekennzeichnet, dass** die Umesterungsreaktion bei vermindertem Druck und unter Durchleiten eines Inertgases durchgeführt wird.

13. Verwendung der nach zumindest einem der Ansprüche 1 bis 12 hergestellten, SiOC-verknüpften Polyethersiloxane, deren Polyetherteil sich aus der Alkoxylierung ungesättigter Startalkohole, bevorzugt von Allylalkohol, herleitet als PU Schaumstabilisator, Entschäumer und/oder Entlüfter sowie als Entschäumer- und/oder Entlüfter-Komponente in Lack- und Bindemittelsystemen.

Europäisches Patentamt
European Patent Office
Office européen des brevets

# EUROPÄISCHER RECHERCHENBERICHT

Nummer der Anmeldung
EP 20 17 4599

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y<br>A | DE 24 13 987 A1 (UNION CARBIDE CORP) 25. September 1975 (1975-09-25)<br>* Zusammenfassung; Beispiele 2-3 *<br>* Seiten 2-5, 7 *<br>----- | 13<br>1,3-12<br>2 | INV.<br>C08G77/46<br>C08G77/08<br>B01D19/04 |
| Y,D<br>A | EP 3 438 158 A1 (EVONIK DEGUSSA GMBH [DE]) 6. Februar 2019 (2019-02-06)<br>* Beispiele 2-5 *<br>----- | 1,3-12<br>2 | |

RECHERCHIERTE SACHGEBIETE (IPC)
C08G
F17C
B01D

Der vorliegende Recherchenbericht wurde für alle Patentansprüche erstellt

1

| Recherchenort | Abschlußdatum der Recherche | Prüfer |
|---|---|---|
| Den Haag | 25. Juni 2020 | Dalet, Pierre |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 20 17 4599

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-06-2020

| Im Recherchenbericht angeführtes Patentdokument | Datum der Veröffentlichung | Mitglied(er) der Patentfamilie | Datum der Veröffentlichung |
|---|---|---|---|
| DE 2413987 A1 | 25-09-1975 | KEINE | |
| EP 3438158 A1 | 06-02-2019 | CA 3012947 A1 | 01-02-2019 |
| | | CN 109320724 A | 12-02-2019 |
| | | EP 3438158 A1 | 06-02-2019 |
| | | US 2019040205 A1 | 07-02-2019 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2011060050 A1
- WO 2015039837 A1
- EP 2636696 A1
- US 6489500 B2
- US 2917480 A
- US 2834748 A
- US 3133111 A
- US 3801616 A
- US 4408031 A
- EP 1136494 A2
- EP 3438158 A1
- EP 0075703 A
- US 3775452 A
- EP 1031603 A
- US 5158922 A
- EP 0654302 A

### In der Beschreibung aufgeführte Nicht-Patentliteratur

- Deutsche Einheitsmethoden zur Untersuchung von Fetten, Fettprodukten, Tensiden und verwandten Stoffen. wissenschaftliche Verlagsgesellschaft
- **J. POLA et al.** *Collect. Czech. Chem. Commun.,* 1974, vol. 39 (5), 1169-1176
- O-Metal Derivates of Organic Hydroxy Compounds. **W. SIMMLER ; HOUBEN-WEYL.** Methods of Organic Chemistry. vol. VI/2, 162 ff